# EUROPÄISCHE PATENTANMELDUNG

(11) **EP 4 008 472 A1**
(43) Veröffentlichungstag der Anmeldung: **08.06.2022**
(21) Anmeldenummer: 21210188.5
(22) Anmeldetag: 24.11.2021
(51) Int. Cl.: B23K 26/067, B21C 37/26

(54) **VERFAHREN UND VORRICHTUNG ZUR HERSTELLUNG VON RIPPENROHREN**

(30) Priorität: 27.11.2020 DE 102020131560
(71) Anmelder: Schmöle GmbH, 58730 Fröndenberg (DE)
(72) Erfinder: Neumann, Till, 58640 Iserlohn (DE)
(74) Vertreter: Roche, von Westernhagen & Ehresmann

(57) **Zusammenfassung**

Die Erfindung betrifft unter anderem ein Verfahren zur Herstellung von Rippenrohren (10), bei welchem ein erster Rohrgrundkörper (11a) auf seiner Außenseite (12a), insbesondere wendelförmig, mit einem ersten Band (13a) berippt wird, wozu das erste Band (13a) an dem ersten Rohrgrundkörper (11a) unter Einsatz eines ersten Laserstrahls (21a) befestigt wird,
Die Besonderheit besteht unter anderen darin, dass, während das erste Band (13a) an dem ersten Rohrgrundkörper (11a) unter Einsatz des ersten Laserstrahls (21a) befestigt wird, ein zweiter Rohrgrundkörper (11b) auf seiner Außenseite (12b) mit einem zweiten Band (13b) berippt wird, wozu das zweite Band (13b) an dem zweiten Rohrgrundkörper (11b) unter Einsatz eines zweiten Laserstrahls (21b) befestigt wird, wobei der erste und zweite Laserstrahl derselben Laserquelle entstammen.

Die Erfindung betrifft auch eine Vorrichtung zur Herstellung von Rippenrohren.

## Beschreibung

Die Erfindung betrifft zunächst ein Verfahren zur Herstellung von Rippenrohren, welche typischerweise aus einem rundrohrartigen Rohrgrundkörper bestehen, der zur Verbesserung der Wärmetransfereigenschaften, vorzugsweise wendelförmig, mit einem Band berippt wird. Solche Rippenrohre werden in Wärmetauschern eingesetzt und typischerweise von einem Fluid, beispielsweise erwärmtem Wasser, durchlaufen. Die in derartigen Wärmetauschern eingesetzten Rippenrohre können selbst eine Wendelform aufweisen.

Aus dem Stand der Technik sind Verfahren zur Herstellung derartiger Rippenrohre hinlänglich bekannt. Typischerweise wird das Band hierbei mit Hilfe eines Lasers an dem Rohrgrundkörper verschweißt.

Im Stand der Technik besteht ein stetes Bestreben, die Kosten der Herstellung derartiger Rippenrohre zu senken.

Derartige Bestrebungen münden typischerweise darin, dass versucht wird, das Rohr- oder Bandmaterial zu optimieren oder die Berippungsgeschwindigkeit, was sich in der Praxis allerdings grundsätzlich als schwierig erweist.

Daher ist es eine Aufgabe der vorliegenden Erfindung, eine noch ökonomischere Herstellung von Rippenrohren zu ermöglichen.

Die vorliegende Erfindung löst diese Aufgabe gemäß einem ersten Aspekt mit einem Verfahren nach Patentanspruch 1 und ist daher insbesondere dadurch gekennzeichnet, dass während das erste Band an dem ersten Rohrgrundkörper unter Einsatz des ersten Laserstrahls befestigt wird, ein zweiter Rohrgrundkörper auf seiner Außenseite mit einem zweiten Band berippt wird, wozu das zweite Band an dem zweiten Rohrgrundkörper unter Einsatz eines zweiten Laserstrahls befestigt wird, wobei der erste und zweite Laserstrahl derselben Laserquelle entstammen.

Mit anderen Worten besteht die Idee der Erfindung darin, eine einzige Laserquelle zur Berippung mehrerer Rohrgrundkörper zu verwenden.

Noch anders ausgedrückt, wird die Energie der Laserquelle auf mindestens zwei zu berippende Rohrgrundkörper "aufgeteilt".

Somit wird mit nur einer Laserquelle die gleichzeitige Herstellung mehrerer fertiger Rippenrohre ermöglicht, wodurch die Produktionszeiten deutlich gesenkt werden und insbesondere nur die Betriebskosten einer Laserquelle, also eines Lasers, zu tragen sind.

Des Weiteren ist auch lediglich nur eine Kühlung für die Laserquelle notwendig und somit nicht mehrere Kühlungen für mehrere zu betreibende unabhängige Laser.

Dies ist mit einer erheblichen Kosteneinsparung verbunden.

Die Erfindung ermöglicht es somit, gleichzeitig mehrere Rippenrohre herzustellen, obwohl nur eine Laserquelle vorhanden ist.

Die Kosten zur Herstellung einer vorgegebenen Menge an Rippenrohren können somit signifikant gesenkt werden.

Im Sinne der Anmeldung weist das Verfahren bzw. die erfindungsgemäße Vorrichtung also mindestens eine Laserquelle auf, und diese mindestens eine Laserquelle dient zur Erzeugung von mindestens zwei Laserstrahlen.

Grundsätzlich können erfindungsgemäß natürlich auch mehr als zwei Laserstrahlen vorgesehen werden, beispielsweise drei, vier oder noch mehr.

Jeder der mindestens zwei Laserstrahlen dient dabei zur Befestigung jeweils eines Bandes an unterschiedlichen Rohrgrundkörpern.

In diesem Sinne können also, wenn mehr als zwei Laserstrahlen vorgesehen sind, auch mehr als zwei Rohrgrundkörper vorgesehen sein, wobei jedem der zu berippenden Rohrgrundkörper dann genau ein Laserstrahl zugeordnet ist.

Beispielsweise können also drei Rohrgrundkörper vorgesehen werden und drei Laserstrahlen, welche derselben Laserquelle entstammen.

Gemäß dem bevorzugsten Ausführungsbeispiel sind aber genau zwei Laserstrahlen vorgesehen, welche derselben Laserquelle entstammen.

Bei dem Laser kann es sich insbesondere um einen Faserlaser (oder einen CO₂-Laser oder einen Laser mit blauem oder grünem Licht) handeln.

Der Laser kann vorzugsweise eine Leistung von mindestens 2 KW aufweisen, insbesondere von mindestens 3,5 KW, weiter vorzugsweise von mindestens 4 KW.

Die von einem Laser bereitgestellte Leistung kann insbesondere gleichmäßig auf die erzeugten Laserstrahlen (insbesondere also bei zwei Laserstrahlen dann jeweils hälftig) aufgeteilt werden.

Zum Aufteilen der Laserleistung in unterschiedliche Strahlen können geeignete Mittel eingesetzt werden. Insbesondere kann der Laser bzw. die erfindungsgemäße Vorrichtung einen sogenannten Strahl-Teiler ("beamsplitter") aufweisen.

Als Strahl-Teiler kann jeder geeignete Strahl-Teiler eingesetzt werden. Je nach Eigenschaft können beispielsweise Strahl-Teiler-Platten oder Strahl-Teiler-Würfel oder-Prismen vorgesehen sein.

Sollten andere Mittel geeignet sein, können diese selbstverständlich alternativ oder zusätzlich vorgesehen sein, wie beispielsweise TeilerSpiegel.

Je nach Eignung kann es sich um nicht polarisierende oder unpolarisierte oder polarisierende Strahl-Teiler handeln.

Ein geeigneter Strahl-Teiler kann also Bestandteil der erfindungsgemäßen Vorrichtung sein.

Der Laserquelle können zwei oder mehrere Laserauslässe zugeordnet sein. Die Laserquelle kann die Laserauslässe entweder aufweisen oder mit den Laserauslässen verbunden sein, beispielsweise über flexible Leitungen.

Insbesondere können zur Anbindung der Laserauslässe an die Laserquelle Lichtwellenleiter vorgesehen sein, beispielsweise Glasfaserkabel oder ähnliches.

Selbstverständlich sind von der Erfindung aber auch sämtliche andere Anbindungsarten von Laserauslässen an eine Laserquelle umfasst oder die Integration von Laserauslässen in die Laserquelle.

In dem erfindungsgemäßen Verfahren werden mindestens zwei separate Rohrgrundkörper mit Hilfe der mindestens zwei Laserstrahlen berippt.

Die Rohrgrundkörper können hierbei insbesondere gleichartig sein, also beispielsweise gleiche Materialeigenschaften und/oder gleiche Dimensionierungen (wie beispielsweise den gleichen Durchmesser und/oder gleiche Wandstärke und/oder ähnliches) aufweisen. Sie können insbesondere von demselben Rohrgrundkörper abgeschnitten werden.

In diesem Sinne ist anzumerken, dass in dem erfindungsgemäßen Verfahren unter (gleichzeitiger) Nutzung des ersten und zweiten Laserstrahls entweder identische Rippenrohre (mit gleichen Rohrgrundkörpern und Rippen) oder unterschiedliche Rippenrohre (mit unterschiedlichen Rohrgrundkörpern und/oder Rippen) herstellbar sind. Die Erfindung umfasst beide Möglichkeiten: So kann bspw. der erste Laserstrahl Rippen einer ersten Art an einem Rohrgrundkörper erster Art befestigen und der zweite Laserstrahl Rippen zweiter Art an einem zweiten Rohrgrundkörper, wobei sich die Rohrgrundkörper und/oder die Rippen unterscheiden können.

Die mindestens zwei Rohrgrundkörper werden im erfindungsgemäßen Verfahren mit jeweils einem Band berippt. Es handelt sich bei den Bändern, welche den separaten Rohrgrundkörpern zugeordnet werden, typischerweise um separate Bänder.

Diese Bänder können einem gemeinsamen Bandvorrat entstammen (beispielsweise einem gemeinsamen Teller oder einer gemeinsamen Rolle, Coil oder ähnlichem). Es ist aber erfindungsgemäß ebenfalls möglich, dass die Bänder von völlig separaten Vorräten bereitgestellt werden.

Zum Anbringen der Bänder an einem Rohrgrundkörper dienen typischerweise Bandzuführungen.

Jedem der Rohrgrundkörper kann dabei eine eigene, also separate, Einrichtung zur Zuführung von Band zugeordnet sein. Theoretisch kann es aber auch möglich sein, dass den Rohrgrundkörpern eine gemeinsame Einrichtung zur Zuführung von Bandmaterial zugeordnet ist. Entscheidend ist hierbei vielmehr, dass jedem Rohrgrundkörper ein separater Laserstrahl zugeordnet ist, welche aus derselben Laserquelle stammen.

Auch wenn es grundsätzlich vorteilhaft ist, dass jedem Rohrgrundkörper genau ein Laserstrahl zugeordnet ist, so ist von der Erfindung aber naturgemäß auch der Fall umfasst, dass einem jeden Rohrgrundkörper nicht nur ein Laserstrahl zugeordnet ist, sondern deren mehrere. Dies kann beispielsweise dazu dienen, dass ein Rohrgrundkörper, insbesondere gleichzeitig, mit zwei Bändern berippt wird.

Im Sinne des Hauptanspruchs der vorliegenden Patentanmeldung kann insbesondere auch ein dritter Laserstrahl vorgesehen sein, welcher ein drittes Band an einem der beiden Rohrgrundkörper festlegt (sowie ein vierter Laserstrahl, welcher ein viertes Band an dem anderen Rohrgrundkörper festlegt).

Während der Laserstrahl typischerweise festgestellt ist, also stationär auf einen Rohrgrundkörper einwirkt, und auch das Band typischerweise über einen festgelegten (möglicherweise verstellbaren) Bandzufuhrpunkt an den Rohrgrundkörper herangeführt wird, ist der Rohrgrundkörper üblicherweise verlagerbar angeordnet.

Typischerweise wird der Rohrgrundkörper linear, in Axialrichtung, gefördert, während er berippt wird, also während ihm ein Band zugeführt wird und ein Laserstrahl auf ihn einwirkt.

Durch die lineare Verlagerungsbewegung in Kombination mit einer Rotation entsteht dann an der Außenseite des Rohrgrundkörpers die typische wendelförmige Anordnung des festgelegten Bandes.

Der Rohrgrundkörper wird dabei insbesondere relativ zur Bandzuführung bzw. zum Laserstrahl und/oder dem Laserauslass verlagert (gilt für beide Rohrgrundkörper der mindestens zwei Rohrgrundkörper). Vorzugsweise wird der Rohrgrundkörper auch absolut zu diesen Elementen verlagert, d. h. also, er wird bewegt.

Grundsätzlich kann erfindungsgemäß aber auch eine (lineare) Relativbewegung zwischen Rohrgrundkörper und Bandzuführung und/oder Laserstrahlen und/oder Laseraustritt erwirkt werden, indem der Rohrgrundkörper (linear) feststeht und die Bandzuführung (gegebenenfalls samt Bandvorrat) und/oder Laserstrahl bzw. Laseraustritt einem (linear) verlagerbaren Schlitten oder ähnlichem zugeordnet ist.

Beim Anbringen der Bänder an den jeweiligen Rohrgrundkörpern strahlen die Laserstrahlen typischerweise in den Kontaktbereich von Rohrgrundkörper und Band ein, wobei beim Verschweißen vorzugsweise sowohl dem Kontaktbereich zugeordnetes Rohrgrundkörpermaterial als auch dem Kontaktbereich zugeordnetes Bandmaterial von dem betreffenden Laserstrahl bestrahlt und aufgeschmolzen wird.

Das Anbringen der Bänder an den mindestens zwei Rohrgrundkörpern erfolgt insbesondere im Wesentlichen gleichzeitig, was die oben beschriebene erfindungsgemäße Zeitersparnis ermöglicht.

Die Bänder werden vorzugsweise parallel an dem jeweiligen Rohrgrundkörper angeordnet, vorzugsweise derart, dass sie den Rohrgrundkörper wendelförmig umgeben.

Insbesondere weisen die an den beiden Rohrgrundkörpern angebrachten Bänder die gleiche Steigung auf.

Bei der Steigung eines Rohrgrundkörpers kann es sich um eine konstante Steigung handeln oder auch um eine sich ändernde Steigung.

Gemäß einer vorteilhaften Ausgestaltung der Erfindung bestehen sämtliche Bänder aus demselben Material, stammen insbesondere von derselben Bandquelle. Beispielsweise kann zur Bereitstellung der Bänder jeweils ein Edelstahlspaltband genutzt werden, welches für mehrere Bänder von derselben Rolle abgeschnitten sein kann.

Vorzugsweise weisen die Bänder somit auch eine gleiche Breite bzw. spätere Rippenhöhe auf.

Weiter vorzugsweise bestehen die Bänder aus Edelstahl. Grundsätzlich sind von der Erfindung aber auch Bänder umfasst, welche aus Kupfer oder Aluminium oder einem anderen Material bestehen.

Auch wenn es vorteilhaft ist, dass die Bänder der unterschiedlichen Rohrgrundkörper aus demselben Material bestehen, so schließt dies doch nicht die Idee aus, Bänder unterschiedlichen Materials und/oder unterschiedlicher Höhe und/oder unterschiedlicher Dicke und/oder unterschiedlicher Form zur Berippung des ersten bzw. zweiten Rohrgrundkörpers einzusetzen (in dem Sinne, dass der erste Rohrgrundkörper mit einem andersartigen Band berippt wird als der zweite Rohrgrundkörper).

Typischerweise liegt das Bandmaterial jeweils in einer Endlos-Form (beispielsweise einer Rolle oder ähnlichem) vor, und wird an den Rohrgrundkörper herangeführt, welcher typischerweise rotierend aufgehängt ist.

Die Rohrgrundkörper können die Bänder während des Berippungsvorgangs derart mitnehmen, dass die Bänder, insbesondere unter Zug, im Wesentlichen wendelförmig an dem jeweiligen Rohrgrundkörper angelegt und dort von dem jeweiligen Laserstrahl verschweißt werden.

Nach Fertigstellung der Schweißnähte können die hergestellten Rippenrohre dann in eine endgültige Form, beispielsweise eine Wendelform oder auch eine Ω-Form, überführt werden.

Erster und zweiter Laserstrahl können den jeweiligen Kontaktbereich derart bestrahlen, dass die Bänder an einer Kante, insbesondere mit einer unteren Schmalseite (beim beispielsweise rechteckigen Querschnitt) umlaufend an dem Rohrgrundkörper festgelegt und verschweißt werden. Es kann sich hierbei typischerweise um durchgehend homogene, unterbrechungsfreie Bänder handeln.

Bei den Rohrgrundkörpern handelt es sich im Wesentlichen um Rundrohre einer gewünschten Länge, welche während des Berippungsvorgangs typischerweise in einer geraden Form vorliegen. Die Rohrgrundkörper können während des Berippungsvorgangs insbesondere rotieren, wozu sie beispielsweise an ihren Enden eingespannt oder auf einen Dorn aufgebracht sein können. Wie bereits beschrieben, werden sie beim Berippen naturgemäß in Axialrichtung verlagert.

Es sei erneut angemerkt, dass der erste und zweite Rohrgrundkörper grundsätzlich vom selben Basisrohr stammen können. Beispielsweise können sie vom selben Basisrohr abgeschnitten sein, wobei dann zwei Abschnitte des Basisrohres als erster und zweiter Rohrgrundkörper dienen.

Die Bänder können zwecks Berippung typischerweise quer zur Richtung der Längserstreckung der Rohrgrundkörper (also tangential) an den jeweiligen Rohrgrundkörper herangeführt werden.

Gemäß einer weiteren vorteilhaften Ausgestaltung der Erfindung sind die Bänder streifenartig ausgebildet, liegen also zunächst in Streifenform vor.

Des Weiteren ist es vorteilhaft, wenn ihr Querschnitt I-förmig ausgebildet ist, also im Wesentlichen eine Rechteckform ausbildet. Eine solche I-Form weist der Streifen in Abgrenzung zu einer U-Form oder einer L-Form auf. Eine im Querschnitt I-förmiger Ausgestaltung einer Rippe bietet den Vorteil einer optimalen Wärmeleitung und ermöglicht den Einsatz von weniger Rippenwerkstoff. Alternativ kann jedoch eine andere Form (auch eine der genannten Formen) vorgesehen sein.

Auch kann vorgesehen sein, dass den bestrahlten Kontaktbereichen jeweils ein Kühlgas (oder auch ein gemeinsames Kühlgas aus einer gemeinsamen Quelle) zugeleitet wird. Die Zuleitung eines Gases ist aus dem Stand der Technik zwar hinlänglich bekannt, doch dient ein solches Gas bei bisherigen Bandmaterialien im Wesentlichen als Schutzgas und soll einen Korrosionsangriff verhindern. Gemäß der Erfindung kann vorliegend sogar ein Kühlgas eingesetzt werden.

Gemäß der bevorzugsten Ausbildungsform der Erfindung stehen die Bänder vor der Bestrahlung durch den jeweiligen Laserstrahl über einen im Wesentlichen gleichen Umfangswinkel mit den jeweiligen Rohrgrundkörpern in Kontakt. Wird das erste Band am ersten Rohrgrundkörper also beispielsweise über einen Winkel von 30° vom rotierenden Rohrgrundkörper mitgenommen, bevor es von dem ersten Laserstrahl beaufschlagt wird, kann auch das zweite Band am zweiten Rohrgrundkörper über einen entsprechenden Winkel von etwa 30° von dem rotierenden zweiten Rohrgrundkörper mitgenommen werden, bevor es von dem zweiten Laserstrahl beaufschlagt wird.

Die Bänder stehen hierbei vorzugsweise unter Zug, werden also von den rotierenden Rohrgrundkörpern mitgenommen.

Die Rohrgrundkörper können typischerweise aus Kupfer, Aluminium oder einem anderen geeigneten Metall (insbesondere Edelstahl) bestehen. Die Rippen können aus demselben Material bestehen oder aus einem anderen geeigneten Material (beispielsweise Edelstahl, Kupfer, Aluminium, Titanium oder ähnlichem).

Gemäß einer besonders vorteilhaften Ausgestaltung der Erfindung werden die Rohrgrundkörper im Wesentlichen gleich schnell verlagert oder angetrieben. Dies ermöglicht eine maximale Geschwindigkeitsauslastung.

In einer anderen vorteilhaften Ausgestaltung der Erfindung werden die Rohrgrundkörper unterschiedlich schnell verlagert oder angetrieben. Eine entsprechende Vorrichtung ermöglicht insbesondere eine unabhängige Einstellbarkeit der Fördergeschwindigkeiten der beiden Rohrgrundkörper.

Vorzugsweise kann bei einer unterschiedlichen Verlagerungsgeschwindigkeit der beiden Rohrgrundkörper die Verteilung der Energie der Laserquelle auf die beiden entsprechenden Laserstrahlen angepasst werden (insbesondere derart, dass die Energie nicht gleichmäßig aufgeteilt wird, sondern dem Laserstrahl, welcher dem Rohrgrundkörper mit höherer Geschwindigkeit zugeordnet ist, mehr Energie zugeordnet wird als dem anderen Laserstrahl).

Die Rohrgrundkörper können insbesondere in einer Art Halterung oder ähnlichem vorgesehen sein, welche als Transporteinrichtung oder Fördereinrichtung eingerichtet ist, um die Rohrgrundkörper, insbesondere linear, zu bewegen.

Vorteilhafterweise können die Rohrgrundkörper unabhängig voneinander angehalten werden. Sie sind also unabhängig voneinander anhaltbar. Dies ermöglicht insbesondere einen unabhängigen Wechsel des Bandmaterials, beispielsweise wenn das Bandmaterial für einen Rohrgrundkörper aufgebraucht ist und Bandmaterial einer neuen Quelle zur Verfügung gestellt werden muss oder ähnliches. Es können also die Fördereinrichtungen für die jeweiligen Rohrgrundkörper unabhängig voneinander angehalten werden, in dem Sinne, dass eine angehalten werden kann, während die andere weiter fördert.

Gemäß einer weiteren besonders vorteilhaften Ausgestaltung der Erfindung sind die Auslässe für die beiden Laserstrahlen im Wesentlichen zwischen den Rohrgrundkörpern angeordnet. Dies ermöglicht eine besonders effektive Geometrie der gesamten Vorrichtung zur Berippung von Rohren.

In diesem Sinne kann dann insbesondere (auch) eine Laserquelle im Wesentlichen zwischen den Rohrgrundkörpern angeordnet sein.

Im Wesentlichen "zwischen" bedeutet im Sinne der vorliegenden Patentanmeldung dabei, dass die Auslässe und/oder die Laserquelle in einem Bereich zwischen den Rohrgrundkörpern angeordnet sind. Sie können die Ebene der Rohrgrundkörper aber auch überlappen.

Gemäß einer weiteren voreilhaften Ausgestaltung der Erfindung sind die mindestens zwei Bänder unter Einsatz jeweils eines Führungselementes an den jeweiligen Rohrgrundkörper heranführbar und an diesem befestigbar.

Bei dem Führungselement handelt es sich insbesondere um den Übergabepunkt einer Bandzuführung an den jeweiligen Rohrgrundkörper, wobei dieses Führungselement typischerweise fest positionierbar ist (insbesondere auch verstellbar ausgebildet sein kann), während der entsprechende Rohrgrundkörper typischerweise um die eigene Achse dreht und verfährt. Jedem Rohrgrundkörper ist also ein eigenes Führungselement zugeordnet.

Grundsätzlich können von der Erfindung aber auch Ausführungsbeispiele umfasst sein, bei welchen den unterschiedlichen Rohrgrundkörpern ein gemeinsames Führungselement zugeordnet ist (welches mehrere Bänder händeln kann).

Die vorliegende Erfindung betrifft des Weiteren eine Vorrichtung zur Herstellung von Rippenrohren, welche insbesondere ein erfindungsgemäßes Verfahren durchführen kann.

In diesem Sinne löst die Erfindung die gestellte Aufgabe gemäß diesem weiteren Aspekt mit einer Vorrichtung nach Patentanspruch 6, welcher insbesondere durch einen zweiten, der Laserquelle zugeordneten Laserauslass zur Bereitstellung eines zweiten Laserstrahls für die Befestigung eines zweiten Bandes an einem zweiten Rohrgrundkörper gekennzeichnet ist.

An dieser Stelle sei angemerkt, dass sämtliche Vorteile und Ausgestaltungen der vorstehend beschriebenen erfindungsgemäßen Verfahren selbstverständlich auch auf die erfindungsgemäße Vorrichtung gemäß Patentanspruch 6 übertragbar sind (jedenfalls soweit keine Widersprüche entstehen). Diese Vorteile sollen an dieser Stelle in Bezug auf die Vorrichtung lediglich aus Gründen der Übersichtlichkeit der Anmeldung nicht sämtlich wiederholt werden, sollen aber auch in Bezug auf die Vorrichtung als offenbart gelten.

Gleiches soll natürlich auch umgekehrt gelten. So sollen sämtliche Vorteile und Ausgestaltungen, welche nachfolgend in Bezug auf die erfindungsgemäße Vorrichtung beschrieben werden, für das erfindungsgemäße, im Wesentlichen bereits beschriebene Verfahren, als mitoffenbart gelten.

In diesem Sinne kann die erfindungsgemäße Vorrichtung den ersten und zweiten Rohrgrundkörper, vorzugsweise linear und/oder im Wesentlich gleich schnell, verlagern oder antreiben, insbesondere relativ zur Laserquelle und/oder den Laserstrahlen.

Auch können bei der Vorrichtung die Auslässe für die beiden Laserstrahlen und/oder die Laserquelle im Wesentlichen zwischen den Rohrgrundkörpern, insbesondere zwischen den Rohrgrundkörpern zugeordneten Halterungen, angeordnet sein.

Diese Aufzählung ist aber lediglich exemplarisch zu verstehen und nicht abschließend.

Gemäß einer besonders vorteilhaften Ausgestaltung der erfindungsgemäßen Vorrichtung weist die Vorrichtung eine erste Halterung für den ersten Rohrgrundkörper und eine zweite Halterung für den zweiten Rohrgrundkörper auf. Diese Halterungen können nach Art von Fördereinrichtungen ausgebildet sein und die Rohrgrundkörper, vorzugsweise linear, zwecks Berippung verlagern oder fördern.

Insbesondere können die Halterungen völlig separat voneinander ausgestaltet sein oder als Halterungen einer gemeinsamen Halteeinrichtung, welche beispielsweise einen ersten Halterungsabschnitt zur Haltung des ersten Rohrgrundkörpers und einen zweiten Halterungsabschnitt zur Halterung eines zweiten Rohrgrundkörpers aufweist, ausgestaltet sein.

Die Halterungen können dabei insbesondere schlittenförmig oder ähnlich ausgebildet sein.

Sie können insbesondere relativ zur Halteeinrichtung verlagerbar sein, und/oder vorzugsweise relativ zu den Laserauslässen und/oder der Laserquelle.

Hierbei ist der erste Laserauslass vorzugsweise der ersten Halterung zugeordnet und der zweite Laserauslass der zweiten Halterung. Dies insbesondere derart, dass der erste Laserauslass auf die erste Halterung ausgerichtet ist und der zweite Laserauslass auf die zweite Halterung.

In diesem Sinne zeigen oder deuten die Laserauslässe also jeweils auf die unterschiedlichen Halterungen, jedenfalls wenn sich diese im nicht bewegten Zustand befinden.

Während einer Berippung können die Halterungen dabei schlittenartig verlagert werden. Die beiden Laserauslässe deuten dabei jeweils auf einen Teil der sich bewegenden Halterungen, nämlich auf den Teil, in dem sich der gerade zu berippende Abschnitt des jeweiligen Rohrgrundkörpers befindet.

Vorzugsweise sind die beiden Laserauslässe über flexible Leitungen mit der Laserquelle verbunden, was eine besonders hohe Flexibilität der Ausgestaltung der erfindungsgemäßen Vorrichtung ermöglicht. Die Laserauslässe können dabei auf die Rohrgrundkörper ausgerichtet sein und/oder ausgerichtet werden.

Schließlich ist erfindungsgemäß vorgesehen, dass die Laserquelle der erfindungsgemäßen Vorrichtung eine Leistung von mindestens 2 KW aufweist, vorzugsweise von mindestens 3,5 KW oder sogar von mindestens 4 KW oder sogar noch mehr.

In diesem Sinne kann die Laserquelle ihre Leistung dann auf die einzelnen Laserauslässe aufteilen bzw. auf die einzelnen von den Laserauslässen ausgelassenen Laserstrahlen, vorzugsweise gleichmäßig. In diesem Sinne kann beispielsweise bei einer Laserquelle mit einer Leistung von etwa 4 KW vorgesehen sein, dass jeder der zwei vorgesehenen Laserauslässe einen Laserstrahl mit einer Leistung von 2 KW bereitstellt.

Weitere Vorteile der Erfindung ergeben sich aus den gegebenenfalls nicht zitierten Unteransprüchen sowie aus der nun folgenden Figurenbeschreibung.

Darin zeigen:
- Fig. 1: in einer sehr schematischen, teilgeschnittenen Seitenansicht, zwei in einem erfindungsgemäßen Verfahren bzw. mit einer erfindungsgemäßen Vorrichtung hergestellte, insbesondere im Wesentlichen gleichzeitig hergestellte, Rippenrohre,
- Fig. 2: in einer abgebrochen dargestellten, seitlichen Schnittansicht jeweils einen Bereich der Rippenrohre gemäß Fig. 1, in einer stark vergrößerten schematischen Darstellung während des Befestigungsvorgangs der Bänder, unter Einsatz von zwei Laserstrahlen, deren nicht dargestellte Strahlenauslässe einer gemeinsamen Quelle zugeordnet sind,
- Fig. 3: in einer schematischen Aufsicht Teile der erfindungsgemäßen Vorrichtung unter Durchführung eines erfindungsgemäßen Verfahrens während der Berippung der zwei Rohrgrundkörper, unter gestrichelter Darstellung eines weiteren Rohrgrundkörpers und der ebenfalls gestrichelten Darstellung der hierfür benötigten Komponenten,
- Fig. 4: in einer sehr schematischen, perspektivischen (Unter-) Ansicht der Aufwicklungsprozess zweier Bänder auf jeweils einem rotierenden Rohrgrundkörper,
- Fig. 5: in einer sehr schematischen Ansicht, etwa gemäß Ansichtspfeil V in Fig. 4, eine frontale, geschnittene Ansicht der Rohrgrundkörper samt Bändern und angedeuteten Laserstrahlauslässen,
- Fig. 6: in einer sehr schematischen Seitenansicht, etwa in einer Ansicht gemäß Fig. 5, ein Ausführungsbeispiel mit an Roboterarmen angeordneten Führungselementen während des Berippungsprozesses zweier Rohrgrundkörper, und
- Fig. 7: in einer Ansicht, etwa gemäß Fig. 6, ein alternatives Ausführungsführungsbeispiel, bei welchem dargestellt ist, dass die Bänder einem gemeinsamen Bandvorrat entstammen und bei welchem die beiden Zuführelemente einander zugeordnet sind, beispielsweise an demselben Roboterarm angeordnet sind.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben oder von Apostrophen bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mitumfasst.

Alle offenbarten Merkmale sind für sich erfindungswesentlich. In die Offenbarung der Anmeldung wird hiermit auch der Offenbarungsgehalt der zugehörigen Prioritätsunterlagen (Abschrift der Voranmeldung) sowie der zitierten Druckschriften und der beschriebenen Vorrichtungen des Standes der Technik vollinhaltlich miteinbezogen, auch zu dem Zweck, einzelne oder mehrere Merkmale dieser Unterlagen in einen oder in mehrere Ansprüche der vorliegenden Anmeldung mitaufzunehmen.

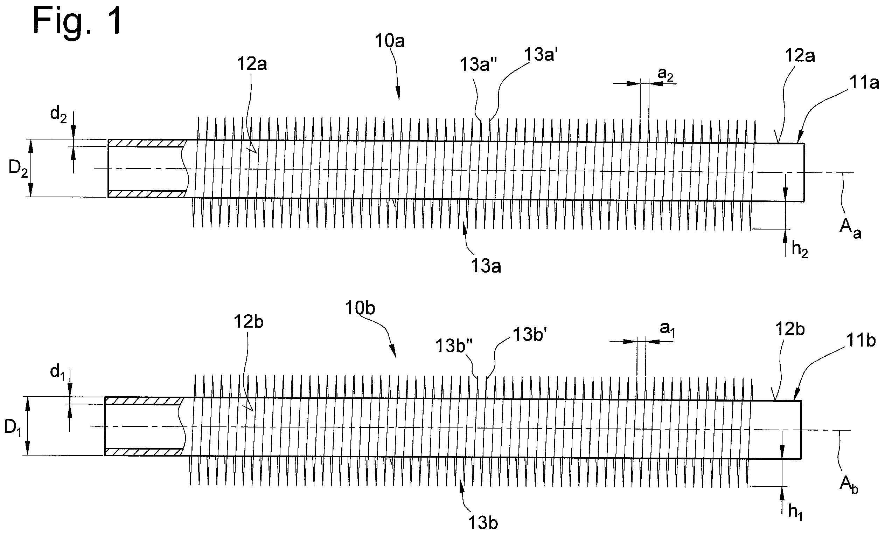

Fig. 1 zeigt zunächst zwei Rippenrohre 10a und 10b, welche (gleichzeitig) in einem erfindungsgemäßen Verfahren mit einer erfindungsgemäßen Vorrichtung hergestellt wurden.

Es ist gut zu erkennen, dass die Rippenrohre 10 jeweils aus einem Rohrgrundkörper 11 bestehen, welcher an seiner Außenseite 12 mit einem Band 13 berippt ist. Obwohl die Bänder 13 jeweils durchgehend ausgebildet sind, seien die in der Figur ersichtlichen einzelnen Abschnitte des Bandes der Einfachheit halber als Rippen 13' bzw. 13" bezeichnet. Der Abstand zwischen zwei Rippen wird in Fig. 1 mit a bezeichnet, die Höhe der Rippen (also auch die Höhe des jeweiligen Bandes 13) mit h, der Durchmesser des Rohres mit D und die Wandstärke des Rohrgrundkörpers 11 mit d.

In dem dargestellten Ausführungsbeispiel sind die beiden Rohre 10a, 10b im Wesentlichen identisch ausgestaltet, d. h. also, dass sie im Wesentlichen eine gleiche Rippenhöhe h, einen gleichen Rohrdurchmesser D, eine gleiche Wandstärke d und einen gleichen Rippenabstand a aufweisen.

Dies ist aber lediglich exemplarisch zu verstehen. Insbesondere können in einem erfindungsgemäßen Verfahren mit einer erfindungsgemäßen Vorrichtung auch zwei unterschiedliche Rippenrohre erstellt werden mit d₁ ≠ d₂ und/oder D₁ ≠ D₂ und/oder h₁ ≠ h₂ und/oder a₁ ≠ a₂.

Bei dem Ausführungsbeispiel gemäß Fig. 1 ist insbesondere der Rippenabstand a für beide Rippenrohre 10 konstant. D. h. also, dass für die Rippenrohre 10 jeweils eine konstante Rippensteigung vorliegt.

Gleichfalls könnte es sich aber selbstverständlichen bei anderen Ausführungsbeispielen auch um Rippenrohre mit sich ändernder Rippensteigung handeln. Insbesondere können in einem erfindungsgemäßen Verfahren sogar zwei Rippenrohre mit unterschiedlicher Rippensteigung und/oder sich unterschiedlich ändernder Rippensteigung hergestellt werden, also beispielsweise, ein erstes Rippenrohr mit einer konstanten Rippensteigung und ein zweites Rippenrohr mit einer sich ändernden Rippensteigung.

Rippenrohre, wie in Fig. 1 dargestellt, sind zwar grundsätzlich bekannt. Sie werden aber im Stand der Technik nach einem anderen Verfahren hergestellt, nämlich beispielsweise in einer Vorrichtung nacheinander oder in zwei Vorrichtungen mit jeweils einem Laser bzw. einer Laserquelle.

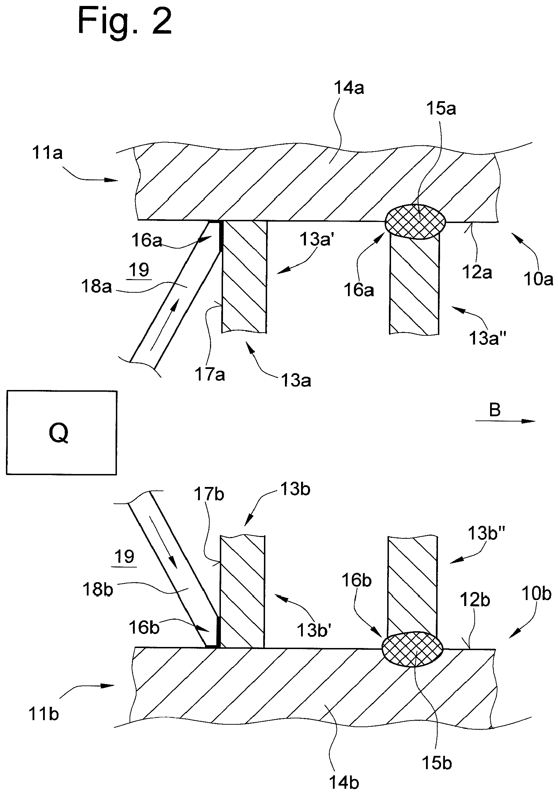

Fig. 2 zeigt in einer sehr schematischen Schnittansicht jeweils einen vergrößerten Bereich an der Außenseite 12 der beiden Rohrgrundkörper 11a und 11b. Die Rohrwand ist dabei mit dem Bezugszeichen 14 versehen und abgebrochen dargestellt, der Hohlbereich in der Mitte eines jeden Rohres aus Gründen der Übersichtlichkeit nicht dargestellt.

Fig. 2 zeigt insbesondere den Prozess des Laserschweißens, also des Anbringens der beiden Bänder 13a und 13b am jeweiligen Rohrgrundkörper 11a bzw. 11b (bzw. deren jeweiliger Außenseite 12).

Hierzu werden die Rohrgrundkörper 11 rotierend in eine Bewegungsrichtung B, nämlich entlang ihrer jeweiligen Längsachse A, bewegt, und die Bänder 13a und 13b werden dabei fortlaufend verschweißt.

Fig. 2 zeigt in ihrem oberen Darstellungsbereich, den ersten Rohrgrundkörper 11a betreffend, zunächst die Rippe 13a" im bereits verschweißten Zustand. Fig. 2 lässt dabei die bereits erstarrte Schmelze 15 im Kontaktbereich 16 zwischen dem jeweiligen Rohrgrundkörper 11 und dem jeweiligen Band 13 erkennen. Die Schmelze 15 besteht anteilig aus Material sowohl des entsprechenden Rohrgrundkörpers 11 als auch des entsprechenden Bandes 13 bzw. der Rippe 13' (an deren Unterseite). Die Rippen 13 sind hierzu im Querschnitt in etwa rechteckig ausgebildet.

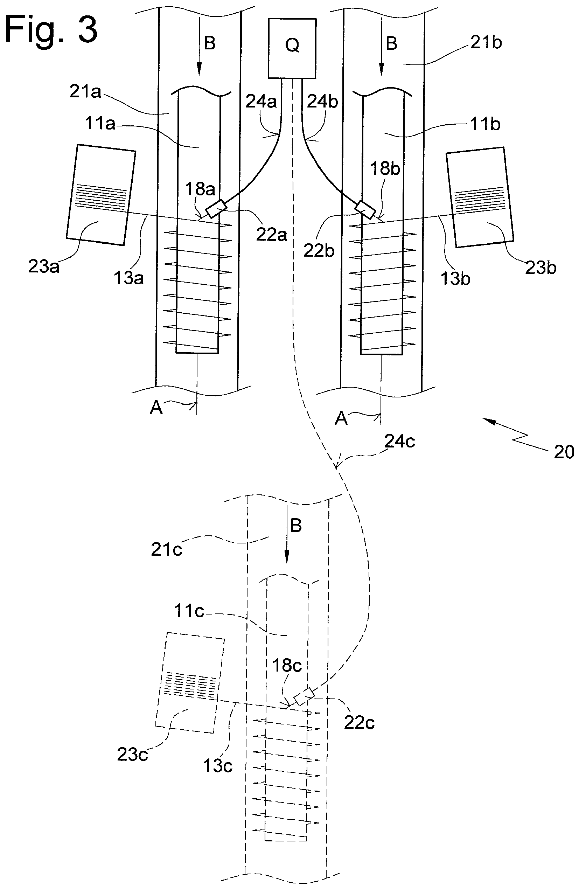

Die in Fig. 3 rechtsseitig dargestellte Rippe 13a" befindet sich in Bewegungs- oder Berippungsrichtung B (als bereits festgelegte Rippe) weiter vorne als eine in Fig. 3 ebenfalls dargestellte Rippe 13a' desselben Bandes 13a. Diese Rippe 13a' des Bandes 13a wird in Fig. 3 gerade in dem Kontaktbereich 16a (welcher aufgrund der linear-geraden Rohroberfläche bzw. -Außenseite 12a und der geraden Seitenkante 17a der Rippe 13a' im Wesentlichen L-förmig ausgebildet ist) verschweißt.

Hierzu fällt ein erster Laserstrahl 18a, beispielsweise ein Faserlaserstrahl, unter einem vorgegebenen Winkel auf den Kontaktbereich 16a. Der Laserstrahl 18a strahlt hierbei sowohl auf das Material des Bandes 13a bzw. der Rippe 13a' als auch auf das Material des Rohrgrundkörpers 11a, insbesondere an dessen Oberfläche 12a.

Zeitgleich zur Anbringung des Bandes 13a mit Hilfe des ersten Laserstrahls 18a wird ein anderes Band 13b an dem zweiten Rohrgrundkörper 11b befestigt, nämlich mit Hilfe eines zweiten Laserstrahls 18b. Hierzu strahlt der Laserstrahl 18b, im dargestellten Ausführungsbeispiel exemplarisch, auf die Außenseite 12b des Rohrgrundkörpers 11b ein, insbesondere im Bereich der Rippe 13b'. Auch dieser Laserstrahl 18b bestrahlt hierbei sowohl Material des Bandes 13b bzw. der Rippe 13b' als auch Material des Rohrgrundkörpers 11b, nämlich in einem Kontaktbereich 16b (welcher gleichfalls im Wesentlichen L-förmig ausgebildet ist). Das Material wird aufgeschmolzen und hieraus entsteht dann die oben bereits beschriebene Schmelze 15b, welche in Fig. 3 exemplarisch bezüglich der Rippe 13b" des Bandes 13b dargestellt wird.

Insofern befindet sich die Rippe 13b' in Berippungsrichtung hinter der Rippe 13" und stellt sozusagen den Zustand des Verschweißens dar, während die Rippe 13b" den bereits fertigen, angeschweißten Zustand einer Rippe bzw. eines Abschnittes des Bandes 13b illustriert. Weitere Abschnitte des Bandes 13b bzw. weitere Rippen des Bandes 13b können sich natürlich insbesondere in Berippungsrichtung B (und somit bereits verschweißt) mit definiertem Abstand anschließen.

Gleiches gilt naturgemäß auch für das erste Band 13a bzw. den ersten Rohrgrundkörper 11a.

An dieser Stelle sei grundsätzlich angemerkt, dass in den Figuren, lediglich aus Gründen der Illustrierung, auf die einzelnen Rippen 13a', 13a", 13b' und 13b" Bezug genommen wird. Hierbei handelt es sich aber naturgemäß nicht um einzelne Körper, sondern jeweils um Abschnitte bzw. Teile des Bandes 13a bzw. des Bandes 13b, welche lediglich in der Querschnittsansicht gemäß Fig. 2 separat erscheinen.

Abschließend sei zu Fig. 2 angemerkt, dass diese erkennen lässt, dass die Laserstrahlen 18 im Wesentlichen in Bewegungsrichtung B ausgerichtet sind, also in Berippungsrichtung B einstrahlen. Dies betrifft jeweils eine Richtungskomponente der Laserstrahlen 18. Die Laserstrahlen strahlen also sozusagen von dem Freibereich 19 weg.

Sehr entscheidend ist in Fig. 2 auch noch, dass beide Laserstrahlen 18 in der Figur abgebrochen dargestellt sind. Sie gehen aber beide auf dieselbe Laserquelle Q zurück. Beide Laserstrahlen werden also von demselben Laser Q erzeugt. Wie diese zwar aus derselben Quelle stammen können, aber in unterschiedliche Strahlungsrichtungen abstrahlen, wird später in Bezug auf die anderen Figuren noch genauer diskutiert werden.

So zeigt Fig. 3 in einer sehr schematischen Aufsicht eine erfindungsgemäße Vorrichtung 20, welche sowohl eine einzelne Laserquelle Q umfasst als auch zwei Halterungen 21, jeweils eine für die beiden dargestellten Rohrgrundkörper 11a und 11b.

Die Halterungen 21 können Mittel vorsehen, um die Rohrgrundkörper 11a bzw. 11b einzuspannen, und diese um ihre Längsachsen A herum zu rotieren.

Insbesondere sind die Halterungen 21 als Fördereinrichtungen ausgebildet, da sie in der Lage sind, die in Fig. 3 abgebrochen dargestellten Rohrgrundkörper 11 in Verlagerungsrichtung B linear fortzubewegen.

Diese Verlagerung der Rohrgrundkörper 11 erfolgt insbesondere relativ zur Laserquelle Q und zu einem mit der Laserquelle Q verbundenen Laserauslass 22 und/oder zu einer in den Figuren nicht dargestellten Zuführung für das jeweilige Band 13a bzw. 13b.

Gemäß Fig. 3 stellt der Laserauslass 22a den Laserstrahl 18a bereit, mit dessen Hilfe das Band 13a an dem Rohrgrundkörper 11a verschweißt wird.

Gleichermaßen stellt der Laserauslass 22b den Laserstrahl 18b bereit, mit dessen Hilfe das Band 13b am Rohrgrundkörper 11b verschweißt wird.

Die jeweiligen Bänder 13 stammen hierbei von Bandvorräten 23, welche in Fig. 3 lediglich angedeutet sind und beispielsweise tellerartig, coilartig oder spulenartig oder ähnlich ausgebildet sein können. Die Relativbewegung der Rohrgrundkörper 11 erfolgt insbesondere auch relativ zu den Bandvorräten 23.

Diese Bandvorräte 23 sind in dem dargestellten Ausführungsbeispiel vollständig separat ausgebildet.

Die Laserauslässe 22 sind gemäß Fig. 3 über Leitungen 24 mit der Laserquelle Q verbunden. Bei den Leitungen 24 kann es sich um Lichtleitungen, beispielsweise um Lichtwellenleiter, insbesondere um Glasfaserkabel oder ähnliches, handeln. Diese Leitungen 24 sind insbesondere flexibel ausgebildet und ermöglichen somit die Ausrichtung der Laserauslässe 22 auf den jeweiligen Rohrgrundkörper 11 bzw. die jeweilige nicht dargestellte Bandzuführung und/oder Halterung 25.

In dem dargestellten Ausführungsbeispiel kann der Laser der Laserquelle Q seine Energie (von beispielsweise 4 KW) auf zwei Laserauslässe 22a und 22b aufteilen und somit zwei, insbesondere im Wesentlichen gleich starke, Laserstrahlen 18a und 18b erzeugen. Diese Laserstrahlen werden dann dazu genutzt, zwei vollständig autark bzw. unabhängige Rohrgrundkörper 11a bzw. 11b mit Bandmaterial zu berippen.

Je nach Stärke des Lasers und Anforderung an den Laserstrahl ist es grundsätzlich aber auch möglich, mit einer einzigen Laserquelle Q mehr als zwei Rohrgrundkörper 11a und 11b zu berippen, nämlich beispielsweise einen weiteren Rohrgrundkörper 11c oder noch weitere.

Ein solcher weiterer Rohrgrundkörper 11c ist in Fig. 3 gestrichelt angedeutet, ebenso wie eine entsprechende Halterung 21c und ein weiteres Band 13c bzw. ein Bandvorrat 23c. Das Band 13c kann dabei am Rohrgrundkörper 11c, wie in Bezug auf die anderen beiden Rohrgrundkörper beschrieben, festgelegt werden, nämlich mit Hilfe eines weiteren Laserstrahls 18c, welcher von einem Laserauslass 22c bereitgestellt ist, der über die Leitung 24c ebenfalls mit der Laserquelle Q verbunden ist.

Die gestrichelte Darstellung soll hierbei lediglich verdeutlichen, dass die Erfindung nicht auf ein Ausführungsbeispiel mit zwei gleichzeitig zu berippenden Rohrgrundkörpern beschränkt ist, wobei eine Laserquelle Q, je nach Leistung, durchaus mehr als zwei Laserstrahlen 18 erzeugen kann bzw. könnte.

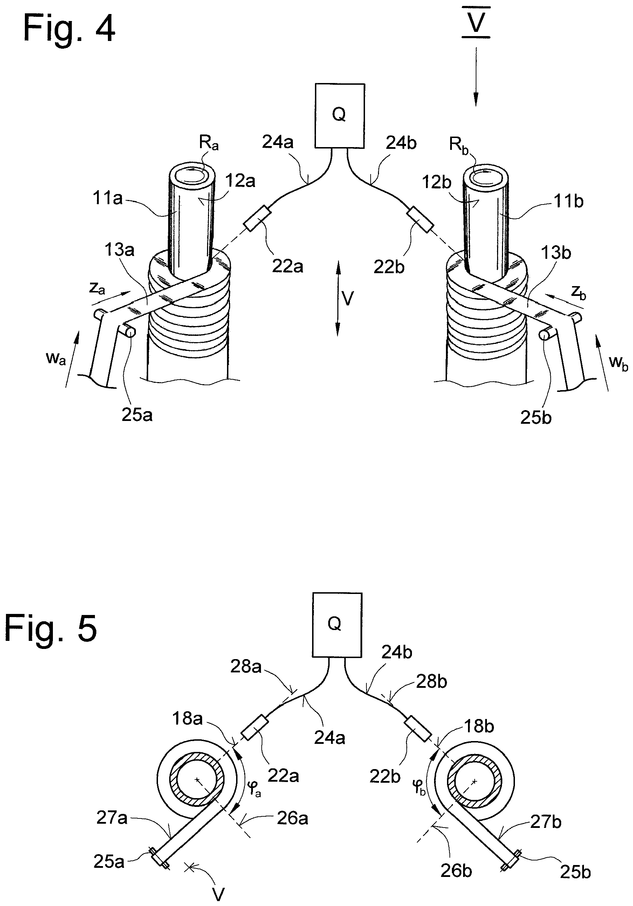

Fig. 4 verdeutlicht in einer perspektivischen, aber gleichfalls schematischen Ansicht das Bewickeln bzw. Berippen der Rohrgrundkörper 11a und 11b mit den Bändern 13a und 13b. Fig. 4 ist hierbei zu entnehmen, dass die Bänder 13a, 13b schließlich gerade, im Wesentlichen entlang Zuführungsrichtungen Z, auf die Rohrgrundkörper 11 zulaufen und diese dann an ihrer Oberfläche 12 tangential kontaktieren.

Bevor die Bänder 13 allerdings in Zuführrichtung Z geführt werden, verlaufen Sie ausweislich Fig. 4 zunächst entlang einer anderer Abwicklungsrichtung W. Sie werden dabei von jeweils einem als Rolle ausgebildeten Führungselement 25 umgelenkt, nämlich aus der Richtung W in Richtung Z.

Die Führungselemente 25 gemäß der Fig. 4 und 5 sind exemplarisch als Umlenkrollen ausgebildet. Diese Führungselemente 25 sind daher typischerweise Bestandteile einer ansonsten nicht dargestellten Führungseinrichtung für das jeweilige Band 13.

Die Führungselemente 25 können insbesondere verstellbar sein, in dem Ausführungsbeispiel gemäß Fig. 5 beispielsweise entlang einer, insbesondere linearen, Verstellrichtung V.

Diese Verstellbarkeit der Führungselemente 25 entlang der Verstellrichtung V ermöglicht hierbei ein Anpassen an die Änderung der Verlagerungsgeschwindigkeit der jeweiligen Rohrgrundkörper 11 in Axialrichtung A (bzw. Bewegungsrichtung B) und/oder Rotationsrichtung R.

Lediglich der Vollständigkeit halber ist angemerkt, dass eine entsprechende Führungseinrichtung in der Praxis tatsächlich mehr als nur ein Umlenkelement aufweist, um das Band von einem Vorrat (bzw. einer "Coil") zielgerichtet auf den jeweiligen Rohrgrundkörper 11 zuleiten zu können.

Die Rohrgrundkörper 11 sind - hier allerdings nicht dargestellt - eingespannt, um diese drehend in die jeweilige Rotationsrichtung R, sowie axial in Axialrichtung A (bzw. Bewegungsrichtung B) anzutreiben. Die Rohrgrundkörper 11 können bei diesem Antrieb ihr jeweiliges Band 13a bzw. 13b mitziehen und dieses, beispielsweise von einer Vorratsrolle oder einem Teller oder einem Bett, gerichtet und unter einer definierten Zug-und Bremskraftwirkung abziehen. Zusätzlich kann auch ein Antrieb für den Vorrat, insbesondere die Vorratsrollen (beispielsweise ein Spulenantrieb), vorgesehen werden.

Aufgrund dieser Zugkräfte und einer gegebenenfalls vorhandenen Vorschubbewegung des jeweiligen Bandes 13 werden die Bänder 13a, 13b an der jeweiligen Oberfläche 12 der Rohrgrundkörper 11 kontinuierlich und fortschreitend beaufschlagt. Die Beaufschlagung beginnt ausweislich der Fig. 5 etwa in einem Bereich, welcher dort mit einer radialen Achse 26 gekennzeichnet ist.

Die Bänder 13 liegen ab diesem Bereich also mit ihrer jeweiligen Unterseite 27 kontaktierend an der jeweiligen Oberseite 12 der Rohrgrundkörper 11 an. Infolge der Rotationsbewegung in der jeweiligen Rotationsrichtung R laufen die Bänder 13 sodann, die Oberflächen 12 der Rohrgrundkörper 11 kontaktierend, über einen Winkelbereich *ϕ* mit dem jeweiligen Rohrgrundkörper 11 mit, bevor sie im Bereich eine mit 28 bezeichneten radialen Achse von jeweils einem Laserstrahl 18 mit dem jeweiligen Rohrgrundkörper 11 verschweißt werden.

Die Laserstrahlen werden dabei von den Laserauslässen 22 ausgelassen, welche über Lichtleitungen 24 mit der gemeinsamen Laserquelle Q verbunden sind. Die flexiblen Zuleitungen 24 ermöglichen dabei eine ideale Einstellung auf den zu bestrahlenden Kontaktbereich 16.

Während es sich bei den dargestellten Führungselementen 25 gemäß der Fig. 4 und 5 um lenkrollenartig ausgebildete Führungselement handelt, sind natürlich auch andere Ausgestaltungen eines erfindungsgemäßen Führungselementes möglich: So z. B. Führungselemente ohne bewegliche Teile, welche beispielweise als im Querschnitt etwa gabelförmige Körper ausgebildet sind oder welche eine Kulisse zur Führung des Bandes bereitstellen.

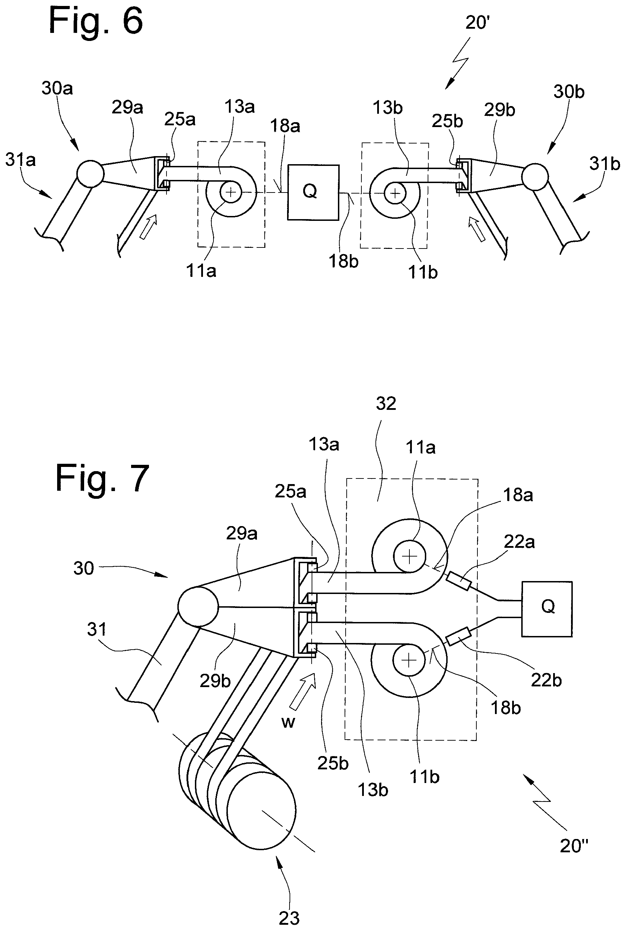

Fig. 6 zeigt dann eine alternative Ausgestaltung der erfindungsgemäßen Vorrichtung 20'. Hierbei sind die nicht näher ausgeführten Führungselemente 25 (mit oder ohne Umlenkrolle) jeweils am Ende eines Gliedes 29 eines Roboterarms 30 angeordnet. Bei diesem Roboterarm 30 kann es sich um einen typischen Roboterarm handeln, wie er aus der Robotik oder Roboterautomatik bekannt ist. Insbesondere können zwischen einzelnen Gliedern (29 und 31 im Ausführungsbeispiel) Gelenkpunkte vorgesehen sein. Ebenfalls können zusätzliche Gelenke auch am Ende des abschließenden Gliedes 29, also beispielsweise im Wesentlichen im Bereich der Führungselemente, vorgesehen sein (nicht explizit dargestellt).

Die Anordnung der Führungselemente 25 an optionalen Roboterarmen ermöglicht/erleichtert dabei die Produktion der erfindungsgemäßen Rippenrohre. Insbesondere kann eine Verstellung während der Berippung erfolgen, nämlich beispielsweise für den Fall, dass zur Erzielung einer Änderung der Rippensteigung eine Geschwindigkeitsänderung (rotatorisch oder in axialer Richtung) der zu berippenden Rohrgrundkörper 11 erfolgt.

In Fig. 6 sind übrigens keine Halterungen oder Spannvorrichtungen für den Rohrgrundkörper 11 dargestellt. Solche Apparaturen werden lediglich durch einen gestrichelten Kasten angedeutet.

Die Roboterarme 30 haben noch weitere Vorteile, nämlich beispielsweise die, dass bei einer Produktionspause oder ähnlichem die Führungselemente 25, beispielsweise zu Wartungszwecken, aus dem Bereich vor dem Übergangspunkt der Bänder 13 an den jeweiligen Rohrgrundkörper 11 weggestellt werden können (mithin können die Roboterarme 30 hierzu verschwenkt werden), dies gleichzeitig und völlig unabhängig voneinander.

In dem Ausführungsbeispiel gemäß Fig. 6 sind die beiden Laserstrahlen 18a, 18b der Quelle Q lediglich schematisch zugeordnet. Dies verdeutlicht, dass die Laserstahlen 18a, 18b in völlig unterschiedliche Richtungen zeigen können, in dem vorliegenden Ausführungsbeispiel also genau in 180° entgegengesetzte Richtungen.

Schließlich zeigt Fig. 7 ein weiteres Ausführungsbeispiel einer erfindungsgemäßen Vorrichtung 20", welche in Ansicht und in wesentlichen Bauelementen etwa der Vorrichtung gemäß Fig. 6 entspricht. Hier ist die gesamte Vorrichtung jedoch nicht im Wesentlichen spiegelsymmetrisch ausgebildet bzw. angeordnet. Vielmehr sind die Rohrgrundkörper 11 in diesem Ausführungsbeispiel - lediglich exemplarisch - nicht nebeneinander, sondern z. B. übereinander angeordnet.

Ein weiteres unabhängig davon als offenbart geltendes Merkmal ist darin zu sehen, dass die nicht dargestellten Halterungen für die Rohrgrundkörper 11 einer gemeinsamen Halteeinrichtung 32 zugeordnet sind bzw. von dieser bereitgestellt werden.

Diese Figur soll insbesondere die Idee von möglichen Synergieeffekten der Erfindung verdeutlich: Während ausweislich Fig. 3 oder Fig. 6 noch völlig separate Bandzuführungen für beide Rohrgrundkörper 11a und 11b vorgesehen waren, bedient im vorliegenden Ausführungsbeispiel ein Roboterarm 30 gemeinsam beide Rohrgrundkörper 11, indem er beispielsweise beide Bänder 13a und 13b führt.

Die entsprechenden Führungsglieder 29a und 29b können dabei starr oder fest zueinander angeordnet sein oder auch unabhängig voneinander bewegbar.

Auch zeigt diese Figur, dass die Bänder 13a, 13b einem gemeinsamen Bandvorrat 23 entstammen, welcher hier lediglich rein exemplarisch als Trommel, Coil oder Rolle ausgebildet ist, aber natürlich auch tellerartig oder ähnlich ausgebildet sein kann.

Neben der grundsätzlichen Idee der Erfindung, lediglich eine Laserquelle Q bereitzustellen und somit gewisse Synergieeffekte zu erzeugen, können insbesondere über die dargestellte(n) Zuführeinrichtung(en) weitere Synergieeffekte erreicht werden.

## Patentansprüche

1. Verfahren zur Herstellung von Rippenrohren (10), bei welchem ein erster Rohrgrundkörper (11a) auf seiner Außenseite (12a), insbesondere wendelförmig, mit einem ersten Band (13a) berippt wird, wozu das erste Band (13a) an dem ersten Rohrgrundkörper (11a) unter Einsatz eines ersten Laserstrahls (21a) befestigt wird, **dadurch gekennzeichnet, dass**, während das erste Band (13a) an dem ersten Rohrgrundkörper (11a) unter Einsatz des ersten Laserstrahls (18a) befestigt wird, ein zweiter Rohrgrundkörper (11b) auf seiner Außenseite (12b) mit einem zweiten Band (13b) berippt wird, wozu das zweite Band (13b) an dem zweiten Rohrgrundkörper (11b) unter Einsatz eines zweiten Laserstrahls (18b) befestigt wird, wobei der erste und zweite Laserstrahl (18) derselben Laserquelle (Q) entstammen.

2. Verfahren nach Anspruch 1, **dadurch gekennzeichnet, dass** die Rohrgrundkörper (11), vorzugsweise linear und/oder im wesentlichen gleichschnell, verlagert oder angetrieben werden, insbesondere relativ zur Laserquelle (Q) und/oder den Laserstrahlen (18).

3. Verfahren nach Anspruch 2, **dadurch gekennzeichnet, dass** die Rohrgrundkörper (11), insbesondere zum Wechsel von Bandmaterial, unabhängig voneinander angehalten werden (können).

4. Verfahren nach einem der voranstehenden Ansprüche, **dadurch gekennzeichnet, dass** Auslässe (22) für die beiden Laserstrahlen (18) und/oder die Laserquelle (Q) im Wesentlichen zwischen den Rohrgrundkörpern (11), insbesondere zwischen den Rohrgrundkörpern (11) zugeordneten Halterungen (21), angeordnet sind.

5. Verfahren nach einem der voranstehenden Ansprüche, **dadurch gekennzeichnet, dass** die Bänder (13) unter Einsatz jeweils eines Führungselementes (25) an den jeweiligen Rohrgrundkörper (11) herangeführt und an diesem befestigt werden.

6. Vorrichtung (100) zur Herstellung von Rippenrohren (10), insbesondere zur Durchführung eines Verfahrens gemäß einem der voranstehenden Ansprüche, umfassend eine Laserquelle (Q) und einen ersten, der Laserquelle (Q) zugeordneten Laserauslass (22a) zur Bereitstellung eines ersten Laserstrahls (18a) für die Befestigung eines ersten Bandes (13a) an einem ersten Rohrgrundkörper (11a), **gekennzeichnet durch** einen zweiten, der Laserquelle (Q) zugeordneten Laserauslass (22b) zur Bereitstellung eines zweiten Laserstrahls (18b) für die Befestigung eines zweiten Bandes (13b) an einem zweiten Rohrgrundkörper (11b).

7. Vorrichtung (20) nach Anspruch 6, **dadurch gekennzeichnet, dass** die Vorrichtung (20) eine erste Halterung (21a) für den ersten Rohrgrundkörper (11a) und eine zweite Halterung (21b) für den zweiten Rohrgrundkörper (11b) aufweist, wobei die Halterungen (21) insbesondere nach Art von Fördereinrichtungen ausgebildet sind.

8. Vorrichtung (20) nach den Ansprüchen 6 und 7, **dadurch gekennzeichnet, dass** der erste Laserauslass (22a) der ersten Halterung (21a) zugeordnet ist und der zweite Laserauslass (22b) der zweiten Halterung (21b), insbesondere derart, dass der erste Laserauslass (22a) auf die erste Halterung (21a) ausgerichtet ist und der zweite Laserauslass (22b) auf die zweite Halterung (21b).

9. Vorrichtung (20) nach einem der Ansprüche 6 bis 8, **dadurch gekennzeichnet, dass** die beiden Laserauslässe (22) über flexible Leitungen (24), insbesondere nach Art von Lichtwellenleitern, beispielsweise Glasfaserkabel, mit der Laserquelle (Q) verbunden sind.

10. Vorrichtung (20) nach einem der Ansprüche 6 bis 9, **dadurch gekennzeichnet, dass** die Laserquelle (Q) eine Leistung von mindestens 2 KW aufweist, vorzugsweise von mindestens 3,5 KW, weiter vorzugsweise von mindestens 4KW.
